# EUROPEAN PATENT APPLICATION

(11) **EP 4 779 884 A1**
(43) Date of publication of application: **22.07.2026**
(21) Application number: 26153012.5
(22) Date of filing: 20.01.2026
(51) Int. Cl.: H04B 7/0413

(54) **RADIO ACCESS NETWORK OPERATION**

(30) Priority: 21.01.2025 GB 202500798
(71) Applicant: Vodafone Group Services Limited, Newbury, Berkshire RG14 2FN (GB)
(72) Inventor: GAST, Florian, London, W2 6BY (GB); FETTWEIS, Gerhard Paul, London, W2 6BY (GB)
(74) Representative: Boult Wade Tennant LLP

(57) **Abstract**

A Radio Access Network (RAN) is configurable between a plurality of operation states, each operation state providing a multiple access service using a distinct combination of modulation scheme and front end of transmitter and/or receiver. In one aspect, a control channel is communication from the RAN that is distinct from the multiple access service, the control channel indicating which of the plurality of operation states to use for a user to access the RAN. In another aspect, the RAN comprises a MIMO antenna arrangement configured to define multiple beams and a respective operation state is allocated to each of the multiple beams. In a further aspect, a respective control plane is provided for each of the plurality of operation states, each of the plurality of operation states providing a different capacity for the RAN.

## Description

### Technical Field of the Disclosure

The disclosure concerns operating a Radio Access Network (RAN), in particular for at least one cellular network. Implementations may include a network entity.

### Background to the Disclosure

Wireless communications systems are increasingly demanding energy-efficient solutions to address the growing environmental concerns and the need for sustainable technologies. For example, current cellular networks cover an extensive range of services with divergent requirements, spanning from rate-intensive high-resolution video streaming to low-rate communications, as seen in 4G narrowband loT or 5G sensor communications.

Despite this diversity, a common analog front end with limited configurability is employed across these applications, leading to suboptimal energy efficiency. While adaptive modulation and coding can increase energy efficiency by reducing transmit power, it solely changes the digital domain, leaving the shared analog radio front end untouched.

However, considering the wide range of requirements for the radio front end, even in the same frequency range, the approach of a single front end that fits all services poses significant challenges in optimizing the power consumption.

Nonetheless, despite these challenges, wireless network design has been predominantly centered on elevating the spectral efficiency and peak data rate, as seen in 5G specifications and ongoing 6G discussions.

A number of recent publications have proposed achieving energy efficiency gains with a "Gearbox" physical layer ("Gearbox-PHY"), capable of dynamically switching between different modulation schemes and corresponding (analog) front ends, each combination of which may be denoted as a respective "gear". Each gear provides different spectral efficiency. These publications include (each of which is incorporated by reference):
G. Fettweis and H. Boche, "6G: The Personal Tactile Internet - And Open Questions for Information Theory," in IEEE BITS the Information Theory Magazin, vol. 1, no. 1, pp. 71-82, Aug 2021. DOI:10.1109/MBITS.2021.3118662;
F. Gast, M. Dörpinghaus, F. Roth and G. Fettweis, "A New Spatio-Temporal Model for Data Rate Distributions in Mobile Networks," in Proceedings of 27th International Workshop on Smart Antennas (WSA 2024), Dresden, Germany, Mar 2024;
F. Gast, M. Dörpinghaus, P. Sen, A. Nimr and G. Fettweis, "Hardware-Aware Energy Efficiency Optimization in Wireless Communications using a Gearbox-PHY," in IEEE Communications Letters, pp. 1-1, Apr 2024. DOI:L0.1109/LCOMM.2024.3395759; and
F. Gast, F. Roth, M. Dörpinghaus, P. Sen, S. Zeitz and G. Fettweis, "Energy Optimization using Joint Modulation Scheme and Front End Adaptation - the Gearbox-PHY," in Proceedings of International Symposium on Wireless Communication Systems (ISWCS 2024), Rio de Janeiro, Brazil, Jul 2024.

The Gearbox-PHY may address the limitations of using a single analog front end by dynamically switching between these "gears", while turning off unused front end components. This may permit supplying the user with a desired data rate, whilst improving (and potentially maximizing) energy efficiency.

For instance, in cases involving low data rates and ample spectral availability, impulse radio-based transmission promises a higher energy efficiency compared to conventional OFDM schemes with QAM (see G. de Streel et al., "Sleeptalker: A ULV 802.15.4a IR-UWB transmitter SoC in 28-nm FDSOI achieving 14 pJ/b at 27 Mb/s with channel selection based on adaptive FBB and digitally programmable pulse shaping," IEEE J. Solid-State Circuits, vol. 52, no. 4, pp. 1163-1177, 2017). However, the latter may excel in delivering high data rates with high spectral efficiencies. Especially with the inclusion of the sub-THz band in cellular networks, spectrum availability may no longer be critical, enabling a shift from spectral to energy efficiency.

Comparing the "Gearbox-PHY" approach with conventional single-gear approach has shown that significant energy savings are possible, suggesting a paradigm shift in focus from peak spectral efficiency to energy efficiency in physical layer design. Achieving those energy savings whilst still providing desired levels of Quality of Service (QoS) remains a challenge, however.

### Summary of the Disclosure

Against this background, the present disclosure provides methods for operating a Radio Access Network (RAN) according to claims 1, 7 and 9 and a network entity as defined by claim 14. Other preferred features are disclosed with reference to the claims and in the description below.

The disclosure provides various ways in which a Gearbox-PHY approach may be implemented to realize energy savings, whilst meeting QoS desiderata or requirements. Each gear defines a distinct combination of modulation scheme and (distinct) front end of transmitter and/or receiver (or transceiver), beneficially to provide a multiple access service thereby. The front end optionally comprises a digital front end and an analog front end. Gears may differ in one of more of: bandwidth utilization; transmission power; spectral efficiency; and communication data rate.

An overarching gear control channel (or plane) can be provided according to one aspect, distinct from the multiple access service (or services) provided by the gears. This new protocol stack layer may help to allow allocation, selection and/or operation of multiple gears. A control channel that is separate from the gears (and the associated multiple access service) advantageously improves flexibility, efficiency and throughput in providing the multiple access service. The gears may each have their own control channel or plane, which are advantageously distinct, beneficially communicated continuously and each typically implemented using the physical layer of the respective gear. For example, the gears may be providing the multiple access service to users via a distinct control plane. The gear control channel indicates gear allocation and/or operation to the users. The gear control channel is advantageously communicated using a highest efficiency gear (typically termed a low gear, especially if it may also have high bandwidth utilization).

In another aspect, each gear provides a distinct RAN capacity and has its own control plane. In some cases, a higher gear physical layer may provide control signaling for lower gears.

One or more gears may be selected based on a variety of criteria, which may include one or more of: traffic level (actual or predicted); energy efficiency; geographical coverage; minimum or maximum QoS; service time frame; and security level.

Gears may be allocated to individual time-frequency slots in an aspect. Another aspect may apply where a MIMO antenna array is used, such that different gears may be allocated to individual beams of the array. In such aspects or combinations of aspects, the allocation can be indicated by the gear control channel, for example.

Aspects may be applied individually or in combination. Any approaches or aspect according to the disclosure may be implemented as software and/or hardware, for example in the form of a base station, controller for a base station or distributed unit.

### Brief Description of the Drawings

The approach of the disclosure may be put into practice in various ways, one of which will now be described by way of example only and with reference to the accompanying drawings in which:
Figure 1 schematically shows a protocol stack arrangement according to the disclosure;
Figure 2 depicts a block diagram of a network entity configuration according to the disclosure; and
Figure 3 illustrates schematically a time and frequency-based allocation according to the disclosure.

### Detailed Description of Preferred Embodiments

As discussed above, the present disclosure is based on the concept of "gears", each gear indicating distinct combination of modulation scheme and front end of transmitter and/or receiver (or transceiver). Typically, the front end of transmitter and/or receiver will be established as appropriate for the respective modulation scheme to improve or optimize one aspect of the overall communication performance, for instance in terms of one or more of: energy or spectral efficiency; bandwidth utilization; transmission power; and communication data rate. The modulation scheme may be understood as a separate operation, effectively "upstream" from the front end. In other, related sense, the modulation scheme can be seen as distinct from the front end.

The front end may include one or more of: a Digital-to-Analog Converter (DAC); local oscillator; mixer; Power Amplifier (PA); Low-Noise Amplifier (LNA); Analog-to-Digital Converter (ADC); and an antenna system (for instance comprising an antenna array). The front end may comprise an analog front end part and/or a digital front end part. For instance, the digital front end part may scale in accordance with complexity and/or data rate of the communication infrastructure.

Examples of modulation schemes for gears may include: impulse radio (for instance based on a spiking modulation scheme, which may include using alternating pulses or unipolar pulses with an appropriate respective front end, for instance having two thresholds for DAC and/or ADC); zero-crossing modulation (suitable for an energy-efficient receiver with 1-bit quantization and/or using a faster-than-Nyquist signaling factor); and Quadrature Amplitude Modulation (QAM, which may employ a standard linear transmitter and/or receiver, for example with a minimal number of bits for DAC and/or ADC). The front end may be defined in respect the components (as discussed above) and/or one or more parameters in relation to at least one component.

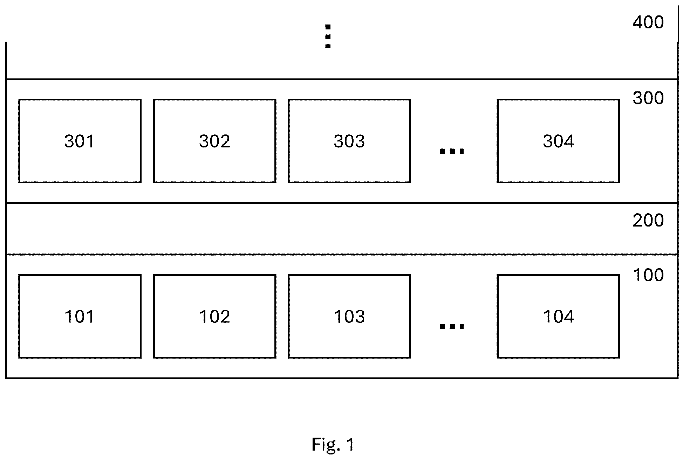

Referring first to Figure 1, there is schematically shown a protocol stack arrangement. The physical (PHY) layer 100 of the protocol stack is shown with multiple gears: a first gear 101 (for example, impulse radio with appropriate front end); a second gear 102 (for example, zero-crossing modulation with corresponding front end); a third gear 103 (for example, based on an Orthogonal Frequency Divisional Multiplexing, OFDM, modulation scheme with a MIMO front end); and one or more further gears, for instance a fourth gear 104 (for instance, a Non-Orthogonal Multiple Access, NOMA-based modulation, with appropriate front end).

The spectrum requirement and/or energy efficiency for each gear is typically different. Thus, the gears may be categorized from low (high energy efficiency, high spectral utilization, low bit rate) to high (low energy efficiency, low spectral utilization, high bit rate), with various gears therebetween with different energy efficiency, spectral utilization and bit rate. Adjustment of the power spectral density used by the gear may allow control of the geographical coverage of the gear in the PHY layer 100.

As will be discussed below, one or more of the gears may be applied on the PHY layer 100. In some cases, multiple gears may be applied for different reasons.

Advantageously, a gear control layer (plane) 200 is provided. The gear control layer 200 is a new control layer, proposed to allow control of the gear being applied on the PHY layer 100. For example, the gear control layer 200 may be used to indicate the gear being used for a specific frequency (or frequency range or band) and/or during a specific time range or time slot. This gear control layer 200 is desirably communicated continuously, which may allow adaptable and low latency communication.

Beneficially, the gear control layer 200 may use a "low" (energy efficient) gear with sufficient coverage for the allocated cell size. Optionally, this gear may be dedicated to the control plane 200. Use of a single gear for this control plane 200 may mitigate idle power issues and enable basic services.

A separate control plane 200, as proposed herein, may further allow operational management of the gears distinctly from the radio access service being provided by the selected (that is, currently operational) gear. Such separation may not only improve the provision of the radio access service, but also permit the additional benefits of different operational configurations, as discussed above. This contrasts with using the individual control plane associated with each gear on the PHY layer 100 also as a control plane for controlling the gear being applied on the PHY layer 100. At first glance, such an approach seems more efficient, as it is likely to result in fewer overheads, but the inventors have recognized these unexpected benefits for a separate gear control layer 200 as now proposed, which outweigh any drawback associated with additional overhead.

A link layer 300 is also provided. The link layer 300 may comprise one or more individual control planes, each associated with a respective gear on the PHY layer 100. Specifically, there is shown: a first link layer 301, associated with the first gear 101; a second link layer 302, associated with the second gear 102; a third link layer 303, associated with the third gear 103; and a fourth link layer 304, associated with the fourth gear 104.

The higher layers of the protocol stack are not illustrated for simplicity. However, such layers would exist as normal in any communication system, depending on its configuration and/or networking architecture. The higher layers for each gear may differ. For example, some gears may use only a limited higher layer structure. Other gears may use a more complicated higher layer structure.

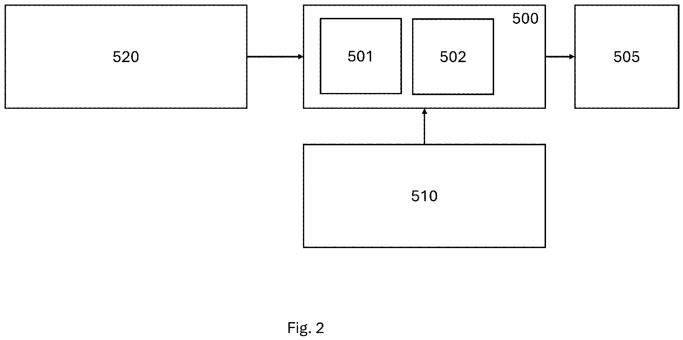

Referring next to Figure 2, there is depicted a block diagram of a network entity configuration. The network entity configuration includes: a transmitter and/or receiver component 500, comprising a coding and modulation part 501 and a radio frequency (RF) front end 502; an antenna component 505; a gear controller 510; and a network entity controller 520. The network entity controller 520 provides data to the transmitter and/or receiver component 500 for transmission and/or obtains received data from the transmitter and/or receiver component 500. This allows communication at the higher layers of the network architecture. The gear controller 510 allows control of the PHY layer at the transmitter and/or receiver component 500, specifically one or both of the coding and modulation part 501 and the RF front end 502. The antenna component 505 allows transmission and/or reception. This may comprise one or multiple antennas, for instance in an array. A MIMO array may also form part of the antenna component 505.

In general terms, there may be considered one or more approaches for operating a RAN. The RAN is configurable between a plurality of operation states (gears), each operation state (gear) providing a multiple access service using a distinct combination of modulation scheme and front end of transmitter and/or receiver (or transceiver). Such approaches may be implemented as software and/or hardware, for example in the form of a network entity (for example, one or more of: a base station; a base station controller; and a distributed unit) or a controller for such a network entity). Optionally, each of the plurality of operation states may differ in one of more of: bandwidth utilization; transmission power; spectral efficiency; and communication data rate. Various aspects are discussed, which may be implemented separately or in combination.

In one aspect, a control channel is communicated from the RAN. The control channel is beneficially distinct from the multiple access service. In particular, the control channel may indicate which of the plurality of operation states to use for a user to access the RAN. Typically, the multiple access service has an associated control plane that is distinct from this control channel. Additionally or alternatively, the associated control plane is provided using the operation state (that is, using the physical layer associated with that gear). For instance, a control layer for an impulse radio gear may be provided using impulse radio or an OFDM-based gear may be provided using OFDM. In embodiments, the control channel is communicated using a highest efficiency (for example, in terms of energy) operation state from the plurality of operation states. Beneficially, the control channel is communicated continuously.

In another aspect, a respective control plane is provided for each of the plurality of operation states. Each of the plurality of operation states provides a different capacity for the RAN. Optionally, the control plane of an operation state from the plurality of operation states having a higher capacity can also provide control for any operation state from the plurality of operation states having a lower capacity.

According to any aspect, at least one operation state may be allocated from the plurality of operation states based on one or more of: a determined or predicted traffic level; energy efficiency; geographical coverage; a minimum and/or maximum quality of service requirement; a service time frame; and a desired security level.

In embodiments, the RAN may be configurable to switch between the plurality of operation states at an interval. The interval is typically longer than a frame rate of one, some or all of the operation states. For example, the interval may be at least 0.5 seconds, 1 second, 1.5 seconds, 2 seconds, 2.5 seconds or 5 seconds.

Specific implementation options will be discussed below. Further aspects and/or optional features according to the general sense of the disclosure will then be detailed.

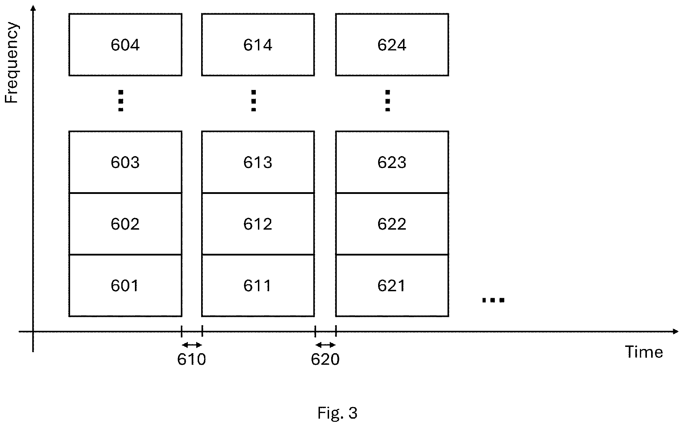

Next referring to Figure 3, there is illustrated schematically a time and frequency-based allocation. This may be used in connection with any of the above approaches or as a stand-alone approach. In Figure 3, time is shown along a horizontal axis and frequency along a vertical axis. This illustrates allocation by the RAN of individual gears to different time-frequency slots (although it is possible that some time-frequency slots may have the same gear allocated). For example, in a first time slot, a number of frequency slots may be available: a first time, first frequency slot 601; a first time, second frequency slot 602; a first time, third frequency slot 603; and a first time, fourth frequency slot 604. Four frequency slots are shown here per time slot, but this number may vary and indeed, different numbers of frequency slots may be possible in different time slots. In a second time slot, separated from the first time slot by a first time gap 610, four frequency slots may again be available: a second time, first frequency slot 611; a second time, second frequency slot 612; a second time, third frequency slot 613; and a second time, fourth frequency slot 614. In a third time slot, separated from the second time slot by a second time gap 620, four frequency slots may again be available: a third time, first frequency slot 621; a third time, second frequency slot 622; a third time, third frequency slot 623; and a third time, fourth frequency slot 624. The duration of the first time gap 610 and second time gap 620 may be the same or different from each other. One, some or all time gaps may have zero duration. Although gaps between the frequency slots are not shown, this is also possible. Moreover, the frequency slots may differ in size and/or differ between different time slots.

Advantageously, the allocation of gears to each time-frequency slot may be communicated using the gear control layer 200 discussed with reference to Figure 1. The gear control layer 200 may also indicate information about the time-frequency slot arrangement, for example. The gear control layer 200 can also allow coverage and connectivity to be established.

This configuration of time-frequency slots may be termed a common resource grid for gears. Similar to OFDM allocation, it thereby defines a time-frequency resource grid. Each resource block may be assigned to a different gear, for example to optimize a key characteristic (for instance, one or more of: energy efficiency; coverage; bit rate).

In some embodiments, a MIMO array may be provided, as discussed with reference to the antenna component 505 of Figure 2. For example, it is known to have a 12 beam MIMO structure, with 8 beams for the cell edge and 4 beams for distances close to the base station with similar area. In such configurations, each beam may have a separate front end, and, thus, can utilize a separate gear. This may result in a "Gearbox-MIMO" arrangement. Advantageously, this may allow combinations of different gears applied to the PHY layer between beams to provide improved multiple access services. For example, a dense urban environment adjacent to a region with more open radio propagation (a large park, for instance) may be provided with different multiple access radio service, with the area with better propagation being offered a high capacity service and the urban environment being provided a service optimized for connectivity. The physical layer between the beams would potentially be significantly different due to the application of the different gears between beams.

An adaptive gearbox equipment configuration can also be considered. Here, not all gears may be implemented in all base stations and/or User Equipment. For instance, only high or peak gears might be activated in "hot spot" areas (those with high throughput and/or activity, for instance, city centers). In this case, only a subset of the protocol stack may implemented starting from the low gear control layer 200 and/or gear-specific link layer 300 and up to a desired capacity-delivering layer for the selected gear. The gear to be used in a specific scenario may be selected based on the required rate, link budget, resource (for example, transmit time and/or bandwidth for the current user) and availability.

Returning to the general senses of the disclosure discussed above, further aspects and/or features may be considered.

According to an aspect, a respective operation state of the RAN may be allocated for each of a plurality of time and frequency slots. This allocation is preferably defined or indicated by the control channel.

In line with a further aspect, the RAN comprises a MIMO antenna arrangement configured to define multiple beams. Then, a respective operation state may be allocated to each of the multiple beams. Additionally or alternatively, the control channel may define or indicate a respective operation state for each of the multiple beams.

Any of the methods described herein may be implemented as a computer program. The computer program may be configured to control a network node or entity to perform any method according to the disclosure. A controller, server or network node of a cellular network may also be provided, configured to operate in accordance with certain methods disclosed herein. For example, the controller, server or network node may include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment (or aspect) or with reference to multiple embodiments (or aspects) are also provided, even if that combination has not been explicitly detailed herein.

## Claims

1. A method for operating a Radio Access Network (RAN), the RAN being configurable between a plurality of operation states, each operation state providing a multiple access service using a distinct combination of modulation scheme and front end of transmitter and/or receiver, the method comprising:
communicating, from the RAN, a control channel that is distinct from the multiple access service, the control channel indicating which of the plurality of operation states to use for a user to access the RAN.

2. The method of claim 1, wherein the multiple access service has an associated control plane that is distinct from the control channel and/or that is provided using the operation state.

3. The method of any preceding claim, wherein the control channel defines a respective operation state of the RAN for each of a plurality of time and frequency slots.

4. The method of any preceding claim, wherein the control channel is communicated using a highest efficiency operation state from the plurality of operation states.

5. The method of any preceding claim, wherein the control channel is communicated continuously.

6. The method of any preceding claim, wherein the RAN comprises a MIMO antenna arrangement configured to define multiple beams and wherein the control channel defines a respective operation state for each of the multiple beams.

7. A method for operating a Radio Access Network (RAN), the RAN being configurable between a plurality of operation states, each operation state providing a multiple access service using a distinct combination of modulation scheme and front end of transmitter and/or receiver and wherein the RAN comprises a MIMO antenna arrangement configured to define multiple beams, the method comprising:
allocating a respective operation state to each of the multiple beams.

8. The method of any preceding claim, wherein each of the plurality of operation states has an associated control plane and provides a different capacity for the RAN.

9. A method for operating a Radio Access Network (RAN), the RAN being configurable between a plurality of operation states, each operation state providing a multiple access service using a distinct combination of modulation scheme and front end of transmitter and/or receiver, the method comprising:
providing a respective control plane for each of the plurality of operation states, each of the plurality of operation states providing a different capacity for the RAN.

10. The method of claim 8 or claim 9, wherein the control plane of an operation state from the plurality of operation states having a higher capacity can also provide control for any operation state from the plurality of operation states having a lower capacity.

11. The method of any preceding claim, further comprising:
allocating at least one operation state from the plurality of operation states based on one or more of: a determined or predicted traffic level; energy efficiency; geographical coverage; a minimum and/or maximum quality of service requirement; a service time frame; and a desired security level.

12. The method of any preceding claim, wherein each of the plurality of operation states differ in one of more of: bandwidth utilization; transmission power; spectral efficiency; and communication data rate.

13. The method of any preceding claim, wherein the RAN is configurable to switch between the plurality of operation states at an interval of at least 1 second.

14. A network entity for a Radio Access Network (RAN), the network entity being configured to operate in accordance with the method of any preceding claim.

15. The network entity of claim 14, wherein the network entity comprises one or more of: a base station; a base station controller; and a distributed unit.
